(19)
Europäisches
Patentamt
European
Patent Office
Office européen
des brevets

(11) **EP 3 475 336 B1**

(12) **EUROPÄISCHE PATENTSCHRIFT**


(45) Veröffentlichungstag und Bekanntmachung des Hinweises auf die Patenterteilung:
**23.09.2020 Patentblatt 2020/39**

(21) Anmeldenummer: **17730204.9**

(22) Anmeldetag: **20.06.2017**

(51) Int Cl.:
***C08G 64/02*** *(2006.01)* ***C08G 64/34*** *(2006.01)*
***C08G 65/26*** *(2006.01)*

(86) Internationale Anmeldenummer:
**PCT/EP2017/065001**

(87) Internationale Veröffentlichungsnummer:
**WO 2017/220520 (28.12.2017 Gazette 2017/52)**


(54) **VERFAHREN ZUR HERSTELLUNG VON POLYETHERCARBONATPOLYOLEN**

METHOD FOR MANUFACTURING POLYETHER CARBONATE POLYOLS

PROCÉDÉ DE PRODUCTION DE POLYÉTHERCARBONATPOLYOLES


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2016 EP 16175835**

(43) Veröffentlichungstag der Anmeldung:
**01.05.2019 Patentblatt 2019/18**



(73) Patentinhaber: **Covestro Intellectual Property GmbH & Co. KG**
**51373 Leverkusen (DE)**

(72) Erfinder:
- **HOFMANN, Jörg**
**47800 Krefeld (DE)**
- **RAUWALD, Urs**
**40593 Düsseldorf (DE)**
- **BRAUN, Stefanie**
**51069 Köln (DE)**
- **WOHAK, Matthias**
**41540 Dormagen (DE)**
- **NEFZGER, Hartmut**
**50259 Pulheim (DE)**
- **WELSCH, Nicole**
**51067 Köln (DE)**
- **WOLF, Aurel**
**42489 Wülfrath (DE)**
- **TRAVING, Michael**
**51399 Burscheid (DE)**
- **KRUEGER, Lars**
**51373 Leverkusen (DE)**

(74) Vertreter: **Levpat**
**c/o Covestro AG**
**Gebäude 4825**
**51365 Leverkusen (DE)**



(56) Entgegenhaltungen:
**EP-A1- 2 530 101 WO-A1-2015/014732**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


EP 3 475 336 B1

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

Starter-OH + (e+f+g) [Epoxid, R] + (e+g) $CO_2$ ⟶

Starter-[O-CH₂-CH(R)-O-C(=O)]$_e$-[O-CH₂-CH(R)]$_f$-OH + g [cyclisches Carbonat, R] (I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der HomoPolymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit-und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/058913 offenbart ein Verfahren zur Herstellung von Polyurethan-Weichschaumstoffen mit einer verringerten Emission von organischen Stoffen, wobei die eingesetzten Polyethercarbonatpolyole am Kettenende einen Block aus reinen Alkylenoxideinheiten aufweisen.

EP-A 2 530 101 offenbart ein Verfahren zur Herstellung von Polyethercarbonatpolyolen, in denen mindestens ein Alkylenoxid und Kohlendioxid an eine H-funktionelle Startersubstanz in Gegenwart eines DMC-Katalysators reagieren. EP-A 2 530 101 offenbart aber nicht, wie Polyethercarbonatpolyole gegenüber thermischer Belastung stabilisiert werden können, so dass nach thermischer Belastung ein möglichst geringer Gehalt an cyclischem Carbonat erhalten wird.

US-A 4 145 525 offenbart ein Verfahren zur thermischen Stabilisierung von Polyalkylencarbonatpolyolen. Die in US-A 4 145 525 offenbarten Polyalkylencarbonatpolyole weisen alternierende Einheiten aus Alkylenoxid und Kohlendioxid auf. Gemäß der Lehre von US-A 4 145 525 wird zumindest ein Teil der endständigen Hydroxylgruppen des Polyalkylencarbonatpolyols mit einer gegenüber Hydroxyl-Gruppen reaktiven Phosphor-Verbindung umgesetzt unter Bildung einer Sauerstoff-Phosphor-Verbindung. US-A 4 145 525 offenbart keine Polyethercarbonatpolyole. Aus US-A

4 145 525 erhält der Fachmann aber keine Lehre, wie Polyethercarbonatpolyole mit einem möglichst niedrigen Gehalt an cyclischem Carbonat nach thermischer Belastung hergestellt werden können.

Die WO 2015 014732 A1 offenbart ein Verfahren zur Herstellung von Polyethercarbonatpolyolen, in dem zu einem das Polyethercarbonatpolyol enthaltenden Reaktionsgemisch eine Verbindung enthaltend eine Phosphor-Sauerstoff-Bindung oder eine Verbindung des Phosphors, die durch Reaktion mit OH-funktionellen Verbindungen eine oder mehrere P-O-Bindungen ausbilden kann, zugegeben wird.

Es war Aufgabe der vorliegenden Erfindung, ein Verfahren zur Herstellung von Polyethercarbonatpolyolen bereitzustellen, wobei das Verfahren zu einem Produkt führt, welches einen möglichst geringen Gehalt an cyclischem Carbonat aufweist. Insbesondere war es Aufgabe, Polyethercarbonatpolyole zur Verfügung zu stellen, die nach thermischer Belastung einen möglichst geringen Gehalt an cyclischem Carbonat aufweisen.

Überraschend wurde gefunden, dass die nach dem erfindungsgemäßen Verfahren erhältlichen Polyethercarbonatpolyole nach thermischer Belastung einen geringen Gehalt an cyclischem Carbonat aufweisen.

Überraschend wurde gefunden, dass eine Polyethercarbonatpolyol-Mischung, wobei die Polyethercarbonatpolyole dadurch gekennzeichnet sind, dass mindestens 98 mol-% der Polyethercarbonatpolyol-Endgruppen aus jeweils einem terminalen Block von mindestens zwei Alkylenoxid-Einheiten bestehen, und die Polyethercarbonatpolyol-Mischung Komponente K enthält, nach thermischer Belastung einen geringen Gehalt an cyclischem Carbonat aufweist.

Überraschend wurde gefunden, dass Polyethercarbonatpolyole, die einen gegenüber dem Stand der Technik niedrigeren Gehalt an cyclischem Carbonat aufweisen, erhalten werden durch ein Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplex¬katalysators auf Basis der Metalle Zink und/oder Cobalt, wobei

(α) gegebenenfalls eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator vorgelegt wird,
(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird,
(γ) Alkylenoxid und Kohlendioxid an H-funktionelle Startersubstanz in einem Reaktor bei einem Gesamtdruck (absolut) von 5 bis 120 bar in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
(δ) das in Schritt (γ) erhaltene Reaktionsgemisch im Reaktor verbleibt oder gegebenenfalls kontinuierlich in einen Nachreaktor überführt wird bei einem anfänglichen Gesamtdruck (absolut) von 5 bis 120 bar, wobei jeweils im Wege einer Nachreaktion der Gehalt an freiem Alkylenoxid im Reaktionsgemisch reduziert wird, und wobei der Gesamtdruck (absolut) während des Schrittes (δ) um bis zu 50 % abnehmen kann, und
(ζ) der Gehalt an leicht flüchtigen Bestandteilen des erhaltenen Reaktionsgemischs bei einer Temperatur von 80°C bis 200°C thermisch reduziert wird,
dadurch gekennzeichnet, dass
(ε) vor dem Schritt (ζ) das aus Schritt (δ) resultierende Reaktionsgemisch auf einen Gesamtdruck (absolut) von ≤ 2,0 bar, bevorzugt 0,5 bar bis 2,0 bar, besonders bevorzugt 0,9 bar bis 1,1 bar gebracht wird und dann bei einer Temperatur von 80 bis 180°C, bevorzugt 100 bis 160°C, besonders bevorzugt 105 bis 145°C für eine Verweilzeit von mindestens 0,5 h, bevorzugt von 1,0 h bis 20 h, besonders bevorzugt 2,0 h bis 10 h belassen wird, und nach Ablauf dieser Verweilzeit zum resultierenden Gemisch 5 bis 100 ppm, bevorzugt 5 ppm bis 75 ppm, besonders bevorzugt 10 ppm bis 50 ppm Komponente K zugegeben wird, wobei Komponente K ausgewählt ist aus mindestens einer Verbindung, die eine Phosphor-Sauerstoff-Wasserstoff-Gruppe enthält.

Insbesondere eine Verweilzeit in Schritt (ε) von 2,0 h bis 10 h führt zu einem besonders vorteilhaften Ergebnis, nämlich dass das Herstellverfahren bei günstiger Raum-Zeit Ausbeute durchgeführt werden kann und dass die resultierenden Polyethercarbonatpolyole sowohl vor wie auch nach thermischer Belastung einen niedrigen Gehalt an cyclischem Carbonat aufweisen.

Thermische Belastung beim Verfahren zur Herstellung von Polyethercarbonatpolyolen tritt typischerweise bei der Aufreinigung durch thermische Verfahren wie beispielsweise Dünnschichtverdampfung auf.

Optional kann sich nach Schritt (ζ) eine weitere Zugabe mindestens einer Komponente K anschließen, um das erhaltene Produkt auf einen gewünschten Gehalt an einer oder mehrerer bestimmten Komponenten K zu bringen. Beispielsweise wird Komponente K nach Schritt (ζ) in einer Menge von jeweils 10 ppm bis 1000 ppm zugegeben.

Komponente K

Als Komponente K geeignete Verbindungen sind dadurch gekennzeichnet, dass sie mindestens eine Phosphor-Sauerstoff-Wasserstoff-Gruppe enthalten. Vorzugsweise ist Komponente K ausgewählt aus mindestens einer Verbindung aus der Gruppe bestehend aus
Phosphorsäure,
Mono- und Dialkylester der Phosphorsäure,
Mono- und Diarylester der Phosphorsäure,
Mono- und Dialkarylester der Phosphorsäure,
$(NH_4)_2HPO_4$ ,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure, und
Phosphinsäure.

Die Mono- oder Dialkylester von Phosphorsäure sind vorzugsweise die Mono- oder Dialkylester von ortho-Phosphorsäure, Mono, Di- oder Trialkylester von Pyrophosphorsäure und Mono-, Di-, Tri-, Tetra- oder Polyalkylester von Polyphosphorsäure, besonders bevorzugt die jeweiligen Ester mit Alkoholen mit 1 bis 30 C-Atomen. Die Mono- oder Diarylester von Phosphorsäure sind vorzugsweise die Mono- oder Diarylester von ortho-Phosphorsäure, Mono, Di- oder Triarylester von Pyrophosphorsäure und Mono-, Di-, Tri-, Tetra- oder Polyarylester von Polyphosphorsäure, besonders bevorzugt die jeweiligen Ester mit Alkoholen mit 6 oder 10 C-Atomen. Die Mono- oder Dialkarylester von Phosphorsäure sind vorzugsweise die Mono- oder Dialkarylester von ortho-Phosphorsäure, Mono, Di- oder Trialkarylester von Pyrophosphorsäure und Mono-, Di-, Tri-, Tetra- oder Polyalkarylester von Polyphosphorsäure, besonders bevorzugt die jeweiligen Ester mit Alkoholen mit 7 bis 30 C-Atomen. Als Komponente K sind beispielsweise die folgenden Verbindungen geeignet: Phosphorsäurediethylester, Phosphorsäuremono¬ethylester, Phosphorsäuredipropylester, Phosphorsäuremono¬propylester, Phosphorsäuredibutylester, Phosphorsäuremonobutylester, Phosphorsäurediphenylester, Phosphorsäuredikresylester, Fructose-1,6-bisphosphat, Glucose-1-phosphat, Phosphorsäure-bis-(4-nitrophenyl)-ester, Phosphorsäuredibenzylester, Phosphorsäure-diethyl-3 -butenylester, Phosphorsäure-dihexadecylester, Phosphorsäure-diphenylester und Phosphorsäure-2-hydroxyethylmethacrylatester.

Als Monoalkylester der Phosphonsäure werden bevorzugt die jeweiligen Ester mit Alkoholen mit 1 bis 30 C-Atomen eingesetzt. Als Monoarylester der Phosphonsäure werden bevorzugt die jeweiligen Ester mit Alkoholen mit 6 oder 10 C-Atomen eingesetzt. Als Monoalkarylester der Phosphonsäure werden bevorzugt die jeweiligen Ester mit Alkoholen mit 7 bis 30 C-Atomen eingesetzt.

Als Mono- und Dialkylester der Phosphorigen Säure werden bevorzugt die Ester mit Alkoholen mit 1 bis 30 C-Atomen eingesetzt. Das beinhaltet beispielsweise Phenylphosphonsäure, Butylphosphonsäure, Dodecylphosphonsäure, Ethylhexylphosphonsäure, Octylphosphonsäure, Ethylphosphonsäure, Methylphosphonsäure und Octadecylphosphonsäure. Als Mono- und Diarylester der Phosphorigen Säure werden bevorzugt die jeweiligen Ester mit Alkoholen mit 6 oder 10 C-Atomen eingesetzt. Als Mono- und Dialkarylester der Phosphorigen Säure werden bevorzugt die jeweiligen Ester mit Alkoholen mit 7 bis 30 C-Atomen eingesetzt.

Besonders bevorzugt ist Komponente K ausgewählt aus mindestens einer Verbindung aus der Gruppe bestehend aus Phosphorsäure, Phosphonsäure, und Phosphinsäure. Höchst bevorzugt ist Komponente K Phosphorsäure.

Die in der Beschreibung der Komponente K genannten Alkohole mit 1 bis 30 C-Atomen sind beispielsweise Methanol, Ethanol, Propanol, Butanol, Pentanol, Hexanol, Heptanol, Octanol, Nonanol, Dekanol, Dodekanol, Tridekanol, Tetradekanol, Pentadekanol, Hexa¬dekanol, Heptadekanol, Octadekanol, Nona¬dekanol, Methoxymethanol, Ethoxy¬methanol, Propoxymethanol, Butoxymethanol, 2-Ethoxyethanol, 2-Propoxyethanol, 2-Butoxy¬ethanol, Phenol, Hydroxyessig¬säure¬ethyl¬ester, Hydroxyessig¬säure¬propyl¬ester, Hydroxypropionsäureethylester, Hydroxy¬propion¬säurepropylester, 1,2-Ethan¬diol, 1,2-Propandiol, 1,2,3-Trihydroxypropan, 1,1,1-Tri¬methylol¬propan oder Penta¬erythrit.

Des Weiteren sind als Komponente K geeignet Verbindungen des Phosphors, die durch Reaktion mit OH-funktionellen Verbindungen (wie bspw. Wasser) eine oder mehrere Phosphor-Sauerstoff-Wasserstoff-Gruppen ausbilden können. Beispielsweise kommen als solche Verbindungen des Phosphors in Frage Phosphor-(V)-sulfid, Phosphortribromid, Phosphortrichlorid und Phosphortriiodid.

Es können auch beliebige Mischungen der vorgenannten Verbindungen als Kom¬po¬nente K eingesetzt werden. Auch kann Kom¬po¬nente K in Mischung mit Suspensionsmittel oder in Mischung mit Phosphorsäuretrialkylester

(insbesondere Phosphorsäuretriethylester) eingesetzt werden.

Zu Schritt (α):

Das erfindungsgemäße Verfahren zur Herstellung von Polyethercarbonatpolyolen durch Anlagerung von Alkylenoxiden und Kohlendioxid an H-funktionelle Startersubstanz kann insbesondere dann den Schritt (α) umfassen, wenn das Verfahren in Gegenwart eines Doppelmetallcyanid (DMC)-Katalysators durchgeführt wird.

Die gegebenenfalls in Schritt (α) eingesetzte Teilmenge der H-funktionellen Startersubstanz kann Komponente K enthalten, beispielsweise in einer Menge von mindestens 100 ppm, bevorzugt von 100 bis 10000 ppm.

Bei dem erfindungsgemäßen Verfahren kann zunächst eine Teilmenge der H-funktionellen Startersubstanz und/oder ein Suspensionsmittel, das keine H-funktionellen Gruppen enthält, im Reaktor vorgelegt werden. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B. Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Als erfindungsgemäß eingesetzte Suspensionsmittel sind ebenfalls geeignet aliphatische Lactone, aromatische Lactone, Lactide, cyclische Carbonate mit mindestens drei gegebenenfalls substituierten Methylengruppen zwischen den Sauerstoffatomen der Carbonatgruppe, aliphatische cyclische Anhydride und aromatischen cyclische Anhydride.

Aliphatische oder aromatische Lactone in Sinne der Erfindung sind cyclische Verbindungen enthaltend eine Esterbindung im Ring, vorzugsweise

4-gliedrige Ringlactone wie β-Propiolacton, β-Butyrolacton, β-Isovalerolacton, β-Caprolacton, β-Isocaprolacton, β-Methyl-β-valerolacton,

5-gliedrige Ringlactone, wie γ-Butyrolacton, γ-Valerolacton, 5-Methylfuran-2(3H)-on, 5-Methylidenedihydrofuran-2(3H)-on, 5-Hydroxyfüran-2(5H)-on, 2-Benzofuran-1(3H)-on und 6-Methy-2-benzofuran-1(3H)-on,

6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,

7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,

höhergliedrige Ringlactone, wie (7*E*)-Oxacycloheptadec-7-en-2-on.

Besonders bevorzugt ist ε-Caprolacton und Dihydrocumarin.

Lactide in Sinne der Erfindung sind cyclische Verbindungen enthaltend zwei oder mehr Esterbindungen im Ring, vorzugsweise Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5 -dione, 3,6-Di(but-3-en-1-yl)-1,4-dioxane-2,5-dion (jeweils einschließlich optisch aktiver Formen). Besonders bevorzugt ist L-Lactid.

Cyclische Carbonate mit mindestens drei gegebenenfalls substituierten Methylengruppen zwischen den Sauerstoffatomen der Carbonatgruppe sind vorzugsweise Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3 -butandiolcarbonat, 1,3-Butandiolcarbonat, 2-Methyl-1,3 -propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Anhydride sind vorzugsweise Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als Suspensionsmittel kann auch eine Mischung aus zwei oder mehreren der genannten Suspensionsmittel eingesetzt werden. Höchst bevorzugt wird in Schritt ($\alpha$) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol, Tetrachlorkohlenstoff, $\varepsilon$-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid eingesetzt.

In einer Ausführungsform der Erfindung wird in Schritt ($\alpha$) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt ($\alpha$) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im nach Schritt ($\gamma$) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in Schritt ($\alpha$) in das resultierende Gemisch (i) aus einer Teilmenge der H-funktionellen Startersubstanz und/oder Suspensionsmittel und (ii) DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird in Schritt ($\alpha$) das resultierende Gemisch (i) aus einer Teilmenge der H-funktionellen Startersubstanz(en) und/oder Suspensionsmittel und (ii) DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt ($\alpha$)

($\alpha$-I) eine Teilmenge der H-funktionellen Startersubstanz und/oder Suspensionsmittel vorgelegt und

($\alpha$-II) die Temperatur der Teilmenge der H-funktionellen Startersubstanz und/oder des Suspensionsmittels auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zur Teilmenge der H-funktionellen Startersubstanz und/oder Suspensionsmittel in Schritt (α-I) oder unmittelbar anschließend in Schritt (α-II) zugesetzt wird, und
wobei das Suspensionsmittel keine H-funktionellen Gruppen enthält.

Zu Schritt (β):

Schritt (β) dient der Aktivierung des DMC-Katalysators und bezieht sich somit auf die Ausführungsform des erfindungsgemäßen Verfahrens in Gegenwart eines DMC-Katalysators. Dieser Schritt (β) kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxid, gegebenenfalls in Gegenwart von $CO_2$, zum DMC-Katalysator bis zum Auftreten der Wärmeentwicklung. Gegebenenfalls kann die Teilmenge des Alkylenoxids in mehreren Einzelschritten, gegebenenfalls in Gegenwart von $CO_2$, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von $CO_2$, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge des Alkylenoxids die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Zu Schritt (γ):

Die Dosierung der H-funktionellen Startersubstanz, Alkylenoxid und gegebenenfalls auch des Kohlendioxids kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung von Alkylenoxid und/oder von H-funktioneller Startersubstanz erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide

bzw. der H-funktionellen Startersubstanzen kann simultan oder sequentiell (portionsweise) über jeweils separate Dosierungen (Zugaben) erfolgen oder über eine oder mehrere Dosierungen, wobei das Alkylenoxid bzw. die H-funktionelle Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt ($\gamma$) die Dosierung der H-funktionellen Startersubstanz zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 5 bis 120 bar, bevorzugt 8 bis 110 bar, besonders bevorzugt von 10 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt ($\gamma$) die Gesamtmenge der H-funktionellen Startersubstanz zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt ($\gamma$)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der H-funktionellen Startersubstanz kann als kontinuierliche Zudosierung in den Reaktor oder portionsweise erfolgen.

Die Schritte ($\alpha$), ($\beta$) und ($\gamma$) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt $\beta$) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt $\gamma$) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten ($\alpha$) und ($\beta$) resultierende aktivierten DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten ($\alpha$) und ($\beta$) resultierende aktivierten DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten ($\alpha$) und ($\beta$) resultierende aktivierten DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren, wobei in Schritt (γ) H-funktionelle Startersubstanz, Alkylenoxid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Startersubstanz suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysatorenthaltende Mischung hergestellt, dann werden gemäß Schritt (γ)

(γ1) jeweils eine Teilmenge an H-funktioneller Startersubstanz, Alkylenoxid und Kohlendioxid zudosiert zum Initiieren der Copolymerisation, und

(γ2) während des Fortschreitens der Copolymerisation jeweils die verbleibende Menge an DMC-Katalysator, H-funktionelle Startersubstanz und Alkylenoxid in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben, wobei die Menge vorzugsweise so gewählt ist, dass der Gehalt an DMC-Katalysator in dem bei Schritt (γ) resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch überraschend gefunden worden, dass das Verfahren der vorliegenden Erfindung zur Herstellung großer Mengen des Polyethercarbonatpolyols verwendet werden kann, wobei anfänglich ein gemäß den Schritten (α) und (β) in einer Teilmenge der H-funktionellen Startersubstanz und/oder in Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht-aktivierter DMC-Katalysator in fester Form oder in Form einer Aufschlämmung in H-funktioneller Startersubstanz oder in Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem

vorherigen Punkt im Verfahren zurückgeführt wird, wodurch durch inkrementelle Zugaben bewirkte Diskontinuitäten geglättet werden.

Zu Schritt (δ)

Gemäß dem Schritt (δ) kann das in Schritt (γ) erhaltene Reaktionsgemisch, welches im allgemeinen einen Gehalt von 0,05 Gew.-% bis 10 Gew.-% Alkylenoxid enthält, im Reaktor einer Nachreaktion unterzogen werden oder es kann kontinuierlich in einen Nachreaktor zur Nachreaktion überführt werden, wobei im Wege der Nachreaktion der Gehalt an freiem Alkylenoxid reduziert wird. In Schritt (δ) wird im Wege der Nachreaktion der Gehalt an freiem Alkylenoxid bevorzugt auf weniger als 0,5 g/l, besonders bevorzugt auf weniger als 0,1 g/l im Reaktionsgemisch reduziert.

Wenn das in Schritt (γ) erhaltene Reaktionsgemisch im Reaktor bei einem anfänglichen Gesamtdruck (absolut) von 5 bis 120 bar verbleibt, wird vorzugsweise das Reaktionsgemisch zur Nachreaktion 10 min bis 24 h bei einer Temperatur von 60 bis 140 °C, besonders bevorzugt 1 h bis 12 h bei einer Temperatur von 80 bis 130 °C gehalten. Vorzugsweise wird das Reaktionsgemisch dabei gerührt, bis der Gehalt an freiem Alkylenoxid auf weniger als 0,5 g/l, besonders bevorzugt auf weniger als 0,1 g/l im Reaktionsgemisch gesunken ist. Durch die Abreaktion von freiem Alkylenoxid und ggf. Kohlendioxid sinkt der Druck im Reaktor während der Nachreaktion im Schritt (δ) im Allgemeinen ab, bis ein konstanter Wert erreicht ist, wobei der Gesamtdruck (absolut) während des Schrittes (δ) um bis zu 50 % abnehmen kann.

Als Nachreaktor kann beispielsweise ein Rohrreaktor, ein Schlaufenreaktor oder ein Rührkessel dienen. Bevorzugt liegt der Druck in diesem Nachreaktor bei einem anfänglichen Gesamtdruck (absolut) von 5 bis 120 bar, vorzugsweise bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) teilweise abgelassen und der nachgeschaltete Reaktor bei einem geringen Überdruck betrieben. Die Temperatur in dem nachgeschalteten Reaktor liegt bevorzugt bei 50 bis 150°C und besonders bevorzugt bei 80 bis 140°C.

Als Nachreaktor wird bevorzugt ein Rohrreaktor eingesetzt, wobei beispielsweise ein einzelner Rohrreaktor oder auch eine Kaskade von mehreren, parallel angeordneten oder linear hintereinander geschalteten Rohrreaktoren verwendet werden kann. Bevorzugt liegt die Verweilzeit im Rohrreaktor dabei zwischen 5 min und 10 h, besonders bevorzugt zwischen 10 min und 5 h.

In einer möglichen Ausführungsform der Erfindung wird, zusätzlich zu Schritt (ε), während der Nachreaktion (Schritt (δ)) Komponente K in einer Menge von 5 ppm bis 1000 ppm, besonders bevorzugt 10 ppm bis 500 ppm, höchst bevorzugt 20 ppm bis 200 ppm, jeweils bezogen auf das in Schritt (γ) erhaltene Reaktionsgemisch, zugegeben. Die Komponente K wird während der Nachreaktion besonders bevorzugt bei einem Gehalt an freiem Alkylenoxid von 0,1 g/l bis 10 g/l, höchst bevorzugt von 1 g/l bis 10 g/l Alkylenoxid und besonders höchst bevorzugt von 5 g/l bis 10 g/l zugegeben. Bei der Durchführung des erfindungsgemäßen Verfahrens mit Verwendung eines Rohrreaktors zur Nachreaktion in Schritt (δ) wird die Komponente K besonders bevorzugt in der zweiten Hälfte der Wegstrecke zudosiert, die das Reaktionsgemisch im Rohrreaktor durchläuft.

Zu Schritt (ε)

Das erfindungsgemäße Verfahren ist dadurch gekennzeichnet, dass vor dem Schritt (ζ) das aus Schritt (δ) resultierende Reaktionsgemisch auf einen Gesamtdruck (absolut) von ≤ 2,0 bar, bevorzugt 0,5 bar bis 2,0 bar, besonders bevorzugt 0,9 bar bis 1,1 bar gebracht wird und dann bei einer Temperatur von 80 bis 180°C, bevorzugt 100 bis 160°C, besonders bevorzugt 105 bis 145°C für eine Verweilzeit von mindestens 0,5 h, bevorzugt von 1,0 h bis 20 h, besonders bevorzugt 2,0 h bis 10 h belassen wird, und nach Ablauf dieser Verweilzeit zum resultierenden Gemisch 5 bis 100 ppm, bevorzugt 5 ppm bis 75 ppm, besonders bevorzugt 10 ppm bis 50 ppm Komponente K zugegeben wird, wobei Komponente K ausgewählt ist aus mindestens einer Verbindung, die eine Phosphor-Sauerstoff-Wasserstoff-Gruppe enthält.

Der Verweilzeitschritt kann dabei sowohl kontinuierlich als auch absatzweise durchgeführt werden, wobei eine kontinuierliche Betriebsweise bevorzugt ist. Für die apparative Umsetzung kommt jegliches Verweilzeitvolumen wie beispielsweise in Behältern, Kesseln, Tanks, Reaktoren, Kolonnen oder entsprechend dimensionierten Wärmetauschern sowie Kombinationen hieraus in Frage. Dabei ist über die konstruktiven Randbedingungen, wie zum Beispiel den Schlankheitsgrad (d.h. das Verhältnis aus Füllhöhe zu Durchmesser) des gewählten Apparats und/oder die Bedingungen im Bereich der Zuführung des Reaktionsgemisches in den Apparat der Grad der Rückvermischung oder Effekte wie eine Kurzschlussströmung im Apparat zu minimieren. Eine Einstellung der Temperatur des Reaktionsgemisches während der Verweilzeit wird über eine Beheizung der Apparatewand, zusätzliche temperierbare Einbauten und/oder im Produktstrom integrierte Wärmetauscher realisiert. Eine kontinuierliche Fahrweise kann darüber hinaus auch in einem oder mehreren Rohren mit entsprechender Temperierung über den Rohrmantel und/oder zusätzliche temperierbare Einbauten durchgeführt werden. Im kontinuierlichen Fall ist die o.g. Verweilzeit als der Quotient aus genutztem Flüssigkeits-

volumen im Verweilzeitbehälter [in $m^3$ bzw. kg] und Durchsatz an Reaktionsgemisch [in $m^3$/h bzw. kg/h] zu bestimmen.

Zu Schritt ($\zeta$)

Der Gehalt an leicht flüchtigen Bestandteilen des erhaltenen Reaktionsgemischs wird bei einer Temperatur von 80°C bis 200°C thermisch reduziert. Dies erfolgt anschließend an die Verweilzeit gemäß Schritt ($\varepsilon$).
Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen das Polyethercarbonatpolyol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen. Ein bevorzugtes Verfahren zur thermischen Reduktion der flüchtigen Bestandteile ist z.B. das in der europäischen Patentanmeldung Nr. 14175603.1 beschriebene zweistufige Verfahren mit einer Reinigungsvorrichtung umfassend eine Verdampfungseinrichtung und eine stromabwärts damit verbundene, mit Inertgas betriebene Strippkolonne.
Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.
DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.
Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.
Die in den DMC-Katalysatoren enthaltenen Doppelmetallcyanid-Verbindungen sind die Reaktionsprodukte wasserlöslicher Metallsalze und wasserlöslicher Metallcyanidsalze.
Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.
Zur Herstellung der Doppelmetallcyanid-Verbindungen geeignete Metallsalze besitzen bevorzugt die allgemeine Formel (II),

$$M(X)_n \qquad (II)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $CO^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$$M_r(X)_3 \qquad (III)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M(X)_s \qquad (IV)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_t \qquad (V)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VI)

$$(Y)_a M'(CN)_b(A)_c \qquad (VI)$$

wobei

M' ausgewählt ist aus einem oder mehreren Metallkationen der Gruppe bestehend aus Fe(II), Fe(III), Co(II), Co(III),

Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des

Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption,

Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 μm/min - 500 μm/min, bevorzugt im Bereich 50 μm/min - 150 μm/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein.

Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \cdot h)$ bis 5 $m^3/(m^2 \cdot h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für eine bevorzugte Ausführungsform der Erfindung war es daher die Aufgabe, Polyethercarbonatpolyole zur Verfügung zu stellen, die sowohl nach thermischer Belastung einen möglichst geringen Gehalt an cyclischem Carbonat aufweisen wie auch zur Herstellung von Polyurethan-Weichschaumstoffen geeignet sind. Für Polyurethananwendungen werden vorzugsweise Polyethercarbonatpolyole eingesetzt, die auf einer H-funktionellen Startersubstanz basieren, welche eine Funktionalität von mindestens 2 besitzt.

Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden.

Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

In einer ersten Ausführungsform betrifft die Erfindung somit ein Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplexkatalysators auf Basis der Metalle Zink und/oder Cobalt, wobei

(γ) Alkylenoxid und Kohlendioxid an H-funktionelle Startersubstanz in einem Reaktor in bei einem Gesamtdruck (absolut) von 5 bis 120 bar Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,

(δ) das in Schritt (γ) erhaltene Reaktionsgemisch im Reaktor verbleibt oder gegebenenfalls kontinuierlich in einen Nachreaktor überführt wird bei einem anfänglichen Gesamtdruck (absolut) von 5 bis 120 bar, wobei jeweils im Wege einer Nachreaktion der Gehalt an freiem Alkylenoxid im Reaktionsgemisch reduziert wird, und wobei der Gesamtdruck (absolut) während des Schrittes (δ) um bis zu 50 % abnehmen kann, und

(ζ) der Gehalt an leicht flüchtigen Bestandteilen des erhaltenen Reaktionsgemischs bei einer Temperatur von 80°C bis 200°C thermisch reduziert wird, dadurch gekennzeichnet, dass

(ε) vor dem Schritt (ζ) das aus Schritt (δ) resultierende Reaktionsgemisch auf einen Gesamtdruck (absolut) von ≤ 2,0 bar, bevorzugt 0,5 bar bis 2,0 bar, besonders bevorzugt 0,9 bar bis 1,1 bar gebracht wird und dann bei einer Temperatur von 80 bis 180°C für eine Verweilzeit von mindestens 0,5 h belassen wird, und nach Ablauf dieser Verweilzeit zum resultierenden Gemisch 5 bis 100 ppm Komponente K zugegeben wird, wobei Komponente K ausgewählt ist aus mindestens einer Verbindung, die eine Phosphor-Sauerstoff-Wasserstoff-Gruppe enthält.

In einer zweiten Ausführungsform betrifft die Erfindung ein Verfahren gemäß der ersten Ausführungsform, wobei in Schritt (ε) das Reaktionsgemisch vor dem Schritt (ζ) bei einer Temperatur von 80 bis 180°C für eine Verweilzeit von 1,0 h bis 20 h belassen wird, und nach Ablauf dieser Verweilzeit zum resultierenden Gemisch 5 bis 100 ppm Komponente K zugegeben wird.

In einer dritten Ausführungsform betrifft die Erfindung ein Verfahren gemäß der ersten Ausführungsform, wobei in Schritt (ε) das Reaktionsgemisch vor dem Schritt (ζ) bei einer Temperatur von 80 bis 180°C für eine Verweilzeit von 1,0 h bis 20 h belassen wird, und nach Ablauf dieser Verweilzeit zum resultierenden Gemisch 5 bis 75 ppm Komponente K zugegeben wird.

In einer vierten Ausführungsform betrifft die Erfindung ein Verfahren gemäß der ersten Ausführungsform, wobei in Schritt (ε) das Reaktionsgemisch vor dem Schritt (ζ) bei einer Temperatur von 100 bis 160°C für eine Verweilzeit von 1,0 h bis 20 h belassen wird, und nach Ablauf dieser Verweilzeit zum resultierenden Gemisch 5 bis 100 ppm Komponente K zugegeben wird.

In einer fünften Ausführungsform ein Verfahren gemäß der ersten Ausführungsform, wobei in Schritt (ε) das Reaktionsgemisch vor dem Schritt (ζ) bei einer Temperatur von 100 bis 160°C für eine Verweilzeit von 2,0 h bis 10 h belassen wird, und nach Ablauf dieser Verweilzeit zum resultierenden Gemisch 5 bis 75 ppm Komponente K zugegeben wird.

In einer sechsten Ausführungsform betrifft die Erfindung ein Verfahren gemäß einer der Ausführungsformen 1 bis 5, wobei die Komponente K, zusätzlich zu Schritt (ε), während Schritt (δ) bei einem Gehalt an freiem Alkylenoxid von 1 g/l bis 10 g/l Alkylenoxid zugegeben wird.

In einer siebten Ausführungsform betrifft die Erfindung ein Verfahren gemäß einer der Ausführungsformen 1 bis 6, wobei vor Schritt (γ)

(β) zur Aktivierung eine Teilmenge (bezogen auf die Gesamtmenge der bei der Aktivierung und Copolymerisation eingesetzten Menge an Alkylenoxiden) von Alkylenoxid zu einer Mischung aus H-funktioneller Startersubstanz und DMC-Katalysator oder zu einer Mischung aus Suspensionsmittel und DMC-Katalysator zugesetzt wird, wobei diese Zugabe der Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

In einer achten Ausführungsform betrifft die Erfindung ein Verfahren gemäß einer der Ausführungsformen 1 bis 7, wobei in einem ersten Schritt

(α) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Suspensionsmittel vor oder nach der Trocknung zugesetzt wird.

In einer neunten Ausführungsform betrifft die Erfindung ein Verfahren gemäß einer der Ausführungsformen 1 bis 8, wobei in Schritt (γ) Alkylenoxid, H-funktionelle Startersubstanz und DMC-Katalysator während der Reaktion kontinuierlich in den Reaktor zudosiert werden in Gegenwart von Kohlendioxid und das resultierende Reaktionsgemisch kontinuierlich aus dem Reaktor entfernt wird.

In einer zehnten Ausführungsform betrifft die Erfindung ein Verfahren gemäß einer der Ausführungsformen 1 bis 9, wobei Komponente K ausgewählt ist aus mindestens einer Verbindung aus der Gruppe bestehend aus Phosphorsäure, Mono- und Dialkylester der Phosphorsäure, Mono-und Diarylester der Phosphorsäure, Mono- und Dialkarylester der Phosphorsäure, $(NH_4)_2HPO_4$ , Phosphonsäure, Monoalkylester der Phosphonsäure, Monoarylester der Phosphonsäure, Monoalkarylester der Phosphonsäure, Phosphorige Säure, Mono- und Dialkylester der Phosphorigen Säure, Mono- und Diarylester der Phosphorigen Säure, Mono- und Dialkarylester der Phosphorigen Säure und Phosphinsäure.

In einer elften Ausführungsform betrifft die Erfindung ein Verfahren gemäß einer der Ausführungsformen 1 bis 10, wobei Komponente K ausgewählt ist aus mindestens einer Verbindung aus der Gruppe bestehend aus Phosphorsäure, Phosphonsäure, und Phosphinsäure.

In einer zwölften Ausführungsform betrifft die Erfindung ein Verfahren gemäß einer der Ausführungsformen 1 bis 11, wobei Komponente K Phosphorsäure ist.

In einer dreizehnten Ausführungsform betrifft die Erfindung ein Verfahren gemäß einer der Ausführungsformen 1 bis 12, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol bei einer Funktionalität von 2 bis 3.

In einer vierzehnten Ausführungsform betrifft die Erfindung ein Verfahren gemäß einer der Ausführungsformen 1 bis 13, wobei in Schritt (δ) das in Schritt (γ) erhaltene Reaktionsgemisch kontinuierlich in einen Nachreaktor überführt wird, wobei der Nachreaktor ein Rohrreaktor ist.

In einer fünfzehnten Ausführungsform betrifft die Erfindung ein Verfahren gemäß einer der Ausführungsformen 1 bis 14, wobei in Schritt (δ) das in Schritt (γ) erhaltene Reaktionsgemisch kontinuierlich in einen Nachreaktor überführt wird, wobei im Wege der Nachreaktion der Gehalt an freiem Alkylenoxid auf weniger als 0,5 g/l reduziert wird.

In einer sechzehnten Ausführungsform betrifft die Erfindung ein Verfahren gemäß einer der Ausführungsformen 1 bis 15, wobei

(α) eine Teilmenge der H-funktionellen Startersubstanz und/oder Suspensionsmittel, das keine H-funktionellen Gruppen enthält, in einem Reaktor jeweils gegebenenfalls gemeinsam mit DMC-Katalysator vorgelegt wird,
(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird,
(γ) Alkylenoxid und Kohlendioxid an H-funktionelle Startersubstanz in einem Reaktor in bei einem Gesamtdruck (absolut) von 5 bis 120 bar Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
(δ) das in Schritt (γ) erhaltene Reaktionsgemisch im Reaktor verbleibt oder gegebenenfalls kontinuierlich in einen Nachreaktor überführt wird bei einem anfänglichen Gesamtdruck (absolut) von 5 bis 120 bar, wobei jeweils im Wege einer Nachreaktion der Gehalt an freiem Alkylenoxid im Reaktionsgemisch reduziert wird, und wobei der Gesamtdruck (absolut) während des Schrittes (δ) um bis zu 50 % abnehmen kann, und
(ζ) der Gehalt an leicht flüchtigen Bestandteilen des erhaltenen Reaktionsgemischs bei einer Temperatur von 80°C bis 200°C thermisch reduziert wird,
dadurch gekennzeichnet, dass
(ε) vor dem Schritt (ζ) das aus Schritt (δ) resultierende Reaktionsgemisch auf einen Gesamtdruck (absolut) von ≤ 2,0 bar, bevorzugt 0,5 bar bis 2,0 bar, besonders bevorzugt 0,9 bar bis 1,1 bar gebracht wird und dann bei einer Temperatur von 80 bis 180°C für eine Verweilzeit von mindestens 0,5 h, bevorzugt von 1,0 h bis 20 h, besonders bevorzugt 2,0 h bis 10 h belassen wird, und nach Ablauf dieser Verweilzeit zum resultierenden Gemisch 5 bis 100 ppm, bevorzugt 5 ppm bis 75 ppm, besonders bevorzugt 10 ppm bis 50 ppm Komponente K zugegeben wird, wobei Komponente K ausgewählt ist aus mindestens einer Verbindung, die eine Phosphor-Sauerstoff-Wasserstoff-Gruppe enthält.

In einer siebzehnten Ausführungsform betrifft die Erfindung ein Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysatorsoder in Gegenwart eines Metallkomplexkatalysators auf Basis der Metalle Zink und/oder Cobalt, wobei

(α) eine Teilmenge der H-funktionellen Startersubstanz und/oder Suspensionsmittel, das keine H-funktionellen

Gruppen enthält, in einem Reaktor jeweils gegebenenfalls gemeinsam mit DMC-Katalysator vorgelegt wird,

(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird,

(γ) Alkylenoxid und Kohlendioxid an H-funktionelle Startersubstanz in einem Reaktor bei einem Gesamtdruck (absolut) von 5 bis 120 bar in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,

(δ) das in Schritt (γ) erhaltene Reaktionsgemisch im Reaktor verbleibt oder gegebenenfalls kontinuierlich in einen Nachreaktor überführt wird, wobei jeweils im Wege einer Nachreaktion der Gehalt an freiem Alkylenoxid im Reaktionsgemisch reduziert wird, und wobei der Gesamtdruck (absolut) während des Schrittes (δ) um bis zu 50 % abnehmen kann,

(ε) das in Schritt (δ) erhaltene Reaktionsgemisch vor dem Schritt (ζ) auf einen Gesamtdruck (absolut) von ≤ 2,0 bar, bevorzugt 0,5 bar bis 2,0 bar, besonders bevorzugt 0,9 bar bis 1,1 bar gebracht wird und dann bei einer Temperatur von 80 bis 180°C, bevorzugt 100 bis 160°C, besonders bevorzugt 105 bis 145°C für eine Verweilzeit von mindestens 0,5 h, bevorzugt von 1,0 h bis 20 h, besonders bevorzugt 2,0 h bis 10 h belassen wird, und nach Ablauf dieser Verweilzeit zum resultierenden Gemisch 5 bis 100 ppm, bevorzugt 5 ppm bis 75 ppm, besonders bevorzugt 10 ppm bis 50 ppm Komponente K zugegeben wird, wobei Komponente K ausgewählt ist aus mindestens einer Verbindung, die eine Phosphor-Sauerstoff-Wasserstoff-Gruppe enthält, und

(ζ) der Gehalt an leicht flüchtigen Bestandteilen des erhaltenen Reaktionsgemischs bei einer Temperatur von 80°C bis 200°C thermisch reduziert wird.

In einer achtzehnten Ausführungsform betrifft die Erfindung Polyethercarbonatpolyole erhältlich nach einem der Ausführungsformen 1 bis 17.

Ebenfalls offenbart ist eine Polyethercarbonatpolyol-Mischung enthaltend Polyethercarbonatpolyol und Komponente K, wobei die Polyethercarbonatpolyole dadurch gekennzeichnet sind, dass mindestens 98 mol-% der Polyethercarbonatpolyol-Endgruppen aus jeweils einem terminalen Block von mindestens zwei Alkylenoxid-Einheiten bestehen und wobei Komponente K ausgewählt ist aus mindestens einer Verbindung, die eine Phosphor-Sauerstoff-Wasserstoff-Gruppe enthält.

**Beispiele:**

Die OH-Zahl wurde gemäß der Vorschrift der DIN 53240 bestimmt. Die Angabe der Einheit in "mg/g" bezieht sich auf mg[KOH]/g[Polyethercarbonatpolyol].

Der Anteil an eingebautem $CO_2$ im resultierenden Polyethercarbonatpolyol sowie das Verhältnis von Propylencarbonat (cyclisches Carbonat) zu Polyethercarbonatpolyol wurden mittels $^1$H-NMR (Firma Bruker, DPX 400, 400 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

Cyclisches Carbonat (welches als Nebenprodukt gebildet wurde) Resonanz bei 4,5 ppm, lineares Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das ggf. als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO

F(1,2-1,0) = Fläche der Resonanz bei 1,2-1,0 ppm für Polyetherpolyol

F(1,6-1,52) = Fläche der Resonanz bei 1,6 bis 1,52 ppm für ggf. eingesetztes 1,8 Octandiol (Starter)

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(VIII)}$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8) - F(4{,}5)] * 102}{N} * 100\% \qquad \text{(IX)}$$

wobei sich der Wert für N ("Nenner" N) nach Formel (X) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(X)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des ggf. eingesetzten Starters 1,8-Octandiol.

Der Gewichtsanteil (in Gew.-%) an cyclischem Carbonat (CC') in der Reaktionsmischung wurde nach Formel (XI) berechnet,

$$CC' = \frac{F(4{,}5) * 102}{N} * 100\% \qquad \text{(XI)}$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyetherpolyol, welches aus Starter aufgebaut wurde, und Polyethercarbonatpolyol, aufgebaut aus Starter, Propylenoxid und Kohlendioxid während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele) ist normiert auf den Anteil des Polyethercarbonatpolyol-Moleküls, das nicht aus dem Starter besteht.

Die Analyse der Endgruppe 1 ($O(CO)O\underline{C}H_2\text{-}CH(OH)CH_3$) mit sekundärem OH erfolgte mittels quantitativer $^{13}C$-NMR-Spektroskopie, wobei sich die chemischen Verschiebungen der Endgruppe 1 wie folgt ergaben: $O(CO)O\underline{C}H_2\text{-}CH(OH)CH_3$: 72,8 ppm, $O(CO)OCH_2\text{-}\underline{C}H(OH)CH_3$: 65,5 ppm und $O(CO)OCH_2\text{-}CH(OH)\underline{C}H_3$: 18,9 ppm.

<u>Eingesetzte Rohstoffe:</u>

| | |
|---|---|
| Polyethercarbonatpolyol: | Polyethercarbonatpolyol mit einer OH-Funktionalität = 2,8, einer OH-Zahl = 56 mg KOH/g und einem $CO_2$-Gehalt = 20 Gew.-% |
| DMC-Katalysator: | Ein getrockneter und gemahlener DMC-Katalysator (Doppelmetallcyanid-Katalysator), hergestellt gemäß Beispiel 6 von WO 2001/80994-A1 |
| Glycerin: | Fa. Aug. Hedinger GmbH & Co. KG |
| Propylenglykol: | Fa. Aug. Hedinger GmbH & Co. KG |

Beispiele 1 bis 17 (Allgemeine Arbeitsvorschrift):

Schritt (γ):

In einen kontinuierlich betriebenen 60 L Druckreaktor mit Gasdosierungseinrichtung und Produktaustragsrohr wurden 32,9 L eines Polyethercarbonatpolyols (OH-Funktionalität = 2,8; OH-Zahl = 56 mg KOH/g; $CO_2$-Gehalt = 20 Gew.-%) enthaltend 200 ppm DMC-Katalysator vorgelegt. Bei einer Temperatur von 108°C und einem Gesamtdruck von 66 bar (absolut) wurden unter Rühren (9 Hz) folgende Komponenten mit den angegebenen Dosierraten dosiert:

- Propylenoxid mit 6,56 kg/h

- Kohlendioxid mit 2,2 kg/h
- Mischung aus Glycerin/Propylenglykol (85 Gew.-% / 15 Gew.-%) enthaltend 0,69 Gew.-% DMC-Katalysator (nicht aktiviert) und 146 ppm (bezogen auf die Mischung aus Glycerin, Propylenglykol und DMC-Katalysator) $H_3PO_4$ (eingesetzt in Form einer 85%-igen wässrigen Lösung) mit 0,254 kg/h.

Die Reaktionsmischung wurde über das Produktaustragsrohr kontinuierlich aus dem Druckreaktor entnommen, so dass das Reaktionsvolumen (32,9 L) konstant gehalten wurde, wobei die mittlere Verweilzeit des Reaktionsgemischs im Reaktor 200 min betrug.

Schritt (δ):

Zur Vervollständigung der Reaktion wurde das entnommene Reaktionsgemisch in einen auf 120°C temperierten Nachreaktor (Rohrreaktor mit einem Reaktionsvolumen von 2,0 L) überführt. Die mittlere Verweilzeit des Reaktionsgemischs im Nachreaktor betrug 12 min. Das Produkt wurde anschließend auf Atmosphärendruck entspannt und dann mit 500 ppm Antioxidans Irganox® 1076 versetzt.

Schritt (ε):

Anschließend an Schritt (δ) wurde das Produkt mittels eines Wärmetauschers auf die gewünschte Temperatur T gebracht und unmittelbar darauf in einen 332 1 Kessel überführt und für die Verweilzeit t bei der Temperatur T gehalten; die jeweils im Beispiel angewandte Temperatur T und Verweilzeit t sind in Tabelle 1 angegeben.
Nach Abschluss der Verweilzeit t wurde das Produkt mit der in Tabelle 1 angegebenen Menge M an Phosphorsäure (Komponente K) versetzt.

Schritt (ζ):

Abschließend wurde das Produkt zur Abtrennung des cyclischen Propylencarbonats einer zweistufigen thermischen Aufarbeitung, nämlich in einer ersten Stufe mittels eines Fallfilmverdampfers gefolgt in einer zweiten Stufe von einer im Stickstoffgegenstrom betriebenen Strippkolonne unterworfen.
Der Fallfilmverdampfer wurde dabei bei einer Temperatur von 160°C und einem Druck von 10 mbar (absolut) betrieben. Der verwendete Fallfilmverdampfer bestand aus Glas mit einer Austauschfläche von 0,5 $m^2$. Der Apparat besaß ein von außen beheiztes Rohr mit einem Durchmesser von 115 mm und ca. 1500 mm Länge.
Die Stickstoff-Strippkolonne wurde bei einer Temperatur von 160°C, einem Druck von 80 mbar (absolut) und einer Stickstoff-Durchflussmenge von 0,6 kg $N_2$ / kg Produkt betrieben. Bei der verwendeten Strippkolonne handelte es sich um eine DN80 Glaskolonne mit 8 m Füllhöhe an Füllkörpern (Raschig Super-Ringe #0,3).
Von den nach Schritt (ζ) erhaltenen Polyethercarbonatpolyolen wurden die OH-Zahl, der Gehalt an eingebautem Kohlendioxid und der Gehalt an cyclischem Propylencarbonat bestimmt.
Zur Ermittlung der thermischen Lagerstabilität der Polyethercarbonatpolyole wurden diese nach Schritt (ζ) erhaltenen Polyethercarbonatpolyole 66 Stunden bei 100°C gelagert. Anschließend wurde der Gehalt an cyclischem Propylencarbonat in den so gelagerten Polyethercarbonatpolyolen gemessen ("Lagerungstest").
In Tabelle 1 sind angegeben:

- die Verweilzeiten (VWZ t) und Temperaturen (Temp. T) während der Verweilzeit,
- die Menge an zugegebener Phosphorsäure (Menge M $H_3PO_4$),
- die OH-Zahl (OHZ) der erhaltenen Polyethercarbonatpolyole,
- der Gehalt an in die Polyethercarbonatpolyole eingebautem Kohlendioxid ($CO_2$),
- der Gehalt an cyclischem Propylencarbonat nach der thermischen Aufarbeitung (cPC) sowie
- der Gehalt an cyclischem Propylencarbonat nach 66 Stunden Lagerung bei 100°C (cPC (@66h/100°C).

Tabelle 1:

| Beispiel | VWZ t (h) | Temp. T (°C) | Menge M $H_3PO_4$ (ppm) | OHZ (mg KOH/g) | $CO_2$ (Gew.-%) | cPC (ppm) | cPC@66h /100°C (ppm) |
|---|---|---|---|---|---|---|---|
| 1*) | 0 | 108 | 31 | 56 | 20,0 | 112 | 604 |
| 2 | 0,5 | 108 | 38 | 58 | 20,3 | 13 | 303 |
| 3 | 2 | 108 | 37 | 57 | 20,3 | 11 | 105 |

(fortgesetzt)

| Beispiel | VWZ t (h) | Temp. T (°C) | Menge M $H_3PO_4$ (ppm) | OHZ (mg KOH/g) | $CO_2$ (Gew.-%) | cPC (ppm) | cPC@66h /100°C (ppm) |
|---|---|---|---|---|---|---|---|
| 4 | 3 | 108 | 40 | 57 | 20,3 | 13 | 104 |
| 5 | 4 | 108 | 40 | 57 | 20,2 | 12 | 107 |
| 6 | 5 | 108 | 30 | 57 | 20,3 | 23 | 65 |
| 7 | 6 | 108 | 38 | 58 | 20,1 | 7 | 51 |
| 8 | 10 | 108 | 34 | 57 | 20,0 | 11 | 46 |
| 9 | 13 | 108 | 31 | 57 | 20,0 | 14 | 75 |
| 10 | 4 | 120 | 32 | 58 | 20,0 | 7 | 37 |
| 11 | 6 | 120 | 10 | 58 | 19,7 | 4 | 56 |
| 12 | 10 | 120 | 36 | 57 | 20,0 | 7 | 26 |
| 13 | 4 | 140 | 32 | 57 | 19,9 | 7 | 33 |
| 14 | 6 | 140 | 17 | 58 | 19,7 | 11 | 43 |
| 15* | 4 | 120 | 0 | 56 | 20,1 | 50 | 113 |
| 16* | 4 | 120 | 125 | 58 | 20,2 | 19 | 236 |
| 17* | 4 | 55 | 32 | 57 | 19,4 | 43 | 449 |
| *) Vergleichsbeispiel; im Falle des Vergleichsbeispiels 1 beträgt im resultierenden Polyethercarbonatpolyol der Gehalt an Endgruppe 1 (($O(CO)OCH_2$-$CH(OH)CH_3$) mit sekundärem OH) 5 mol-% | | | | | | | |

Die Beispiele belegen, dass bei einem Verfahren, bei dem unmittelbar nach Copolymerisation und Nachreaktion zur Reduzierung des Gehalts an freiem Alkylenoxid der Gehalt an leicht flüchtigen Bestandteilen des erhaltenen Reaktionsgemischs thermisch reduziert wird (Vergleichsbeispiel 1), sowohl im so resultierenden Polyethercarbonatpolyol wie auch im Polyethercarbonatpolyol nach dem Lagerungstest ein hoher Gehalt an cyclischem Propylencarbonat resultiert. Wurde dagegen das Reaktionsgemisch gemäß dem erfindungsgemäßen Verfahren (Beispiele 2 bis 14) vor dem Schritt ($\zeta$) für eine Verweilzeit von mindestens 0,5 h belassen und nach Ablauf dieser Verweilzeit zum resultierenden Gemisch Komponente K zugegeben (Schritt ($\varepsilon$), dann war sowohl im so resultierenden Polyethercarbonatpolyol wie auch im Polyethercarbonatpolyol nach dem Lagerungstest der Gehalt an cyclischem Propylencarbonat (cPC) niedriger als bei Vergleichsbeispiel 1. Eine Verweilzeit bei höherer Temperatur wirkte sich günstig aus auf einen niedrigen Gehalt an cPC (siehe Beispiele 5, 10, 13 bzw. Beispiele 11, 14). Hinsichtlich der Dauer der Verweilzeit (Schritt ($\varepsilon$)) wurde ab 5 h Verweilzeit eine Größenordnung an cPC-Gehalt erreicht nach Lagerungstest, die auch bei weiter verlängerter Verweilzeit auf etwa gleichem Niveau blieb (Beispiele 1 bis 9); eine optimale Raum-Zeit-Ausbeute ergab sich daher im Bereich von 2,0 h bis 10 h Verweilzeit.
Vergleichsbeispiel 15 belegt, dass ohne Komponente K die erhaltenen Polyethercarbonatpolyole eine deutlich geringere thermische Stabilität aufweisen als Polyethercarbonatpolyole, die Komponente K enthalten (Beispiel 10). Vergleichsbeispiel 16 zeigt im Vergleich zu Beispiel 10, dass bei Zugabe der Komponente K oberhalb des Bereichs von 5 bis 100 ppm die erhaltenen Polyethercarbonatpolyole eine deutlich geringere thermische Stabilität aufweisen. Vergleichsbeispiel 17 zeigt im Vergleich zu Beispiel 10, dass bei Durchführung des Schrittes ($\varepsilon$) unterhalb von 80°C die erhaltenen Polyethercarbonatpolyole eine deutlich geringere thermische Stabilität aufweisen.

Beispiele 18 bis 20:

Die Beispiele 18 bis 20 wurden gemäß der oben angegebenen Allgemeinen Arbeitsvorschrift durchgeführt, wobei der Gesamtdruck im 60 L Druckreaktor variiert wurde:

Beispiel 18: 26 bar (absolut)
Beispiel 19: 31 bar (absolut)
Beispiel 20: 66 bar (absolut)

In Tabelle 2 sind angegeben:

- die Verweilzeiten (VWZ t) und Temperaturen (Temp. T) während der Verweilzeit,
- die Menge an zugegebener Phosphorsäure (Menge M $H_3PO_4$),
- die OH-Zahl (OHZ) der erhaltenen Polyethercarbonatpolyole,
- der Gehalt an in die Polyethercarbonatpolyole eingebautem Kohlendioxid ($CO_2$),
- der Gehalt an cyclischem Propylencarbonat nach der thermischen Aufarbeitung (cPC)
- der Anteil an Endgruppen ($O(CO)O\underline{C}H_2$-$CH(OH)CH_3$) mit sekundärem OH (Endgruppe 1) im resultierenden Polyethercarbonatpolyol sowie
- der Gehalt an cyclischem Propylencarbonat nach 66 Stunden Lagerung bei 100°C (cPC (@66h/100°C).

Tabelle 2:

| Bsp. | VWZt (h) | Temp. T (°C) | Menge M $H_3PO_4$ (ppm) | OHZ (mg KOH/g) | $CO_2$ (Gew.-%) | cPC (ppm) | Endgruppe 1 [mol-%] | cPC@66h /100°C (ppm) |
|---|---|---|---|---|---|---|---|---|
| 18 | 4 | 120 | 25 | 56 | 12,6 | 5 | < n.n. | 40 |
| 19 | 4 | 120 | 19 | 56 | 15,3 | 5 | < n.n. | 39 |
| 20 | 4 | 120 | 27 | 55 | 19,9 | 8 | < n.n. | 18 |
| < n.n.: Gehalt ist kleiner der Nachweisgrenze von 2 mol-% | | | | | | | | |

Die gemäß den Beispielen 18, 19 und 20 nach dem erfindungsgemäßen Verfahren hergestellten Polyethercarbonatpolyole unterscheiden sich untereinander im Wesentlichen hinsichtlich ihres Gehalts an in die Polyethercarbonatpolyole eingebautem Kohlendioxid (12,6 bis 19,9 Gew.-%). Sie weisen untereinander keine Unterschiede bezüglich der Temperaturbelastung (Verweilzeit und Temperatur) auf, die Menge an zugesetzter Phosphorsäure ist ähnlich, ebenso die Hydroxylzahl und der Gehalt an cyclischem Carbonat (cPC-Gehalt) vor der Lagerung bei 100 °C für 66 Std. Damit verbunden ist, dass sich die Endgruppe 1, also ($O(CO)OCH_2$-$CH(OH)CH_3$) mit sekundärem OH bei den so vorbehandelten Proben nicht mehr nachweisen läßt und mindestens 98 mol-% der Polyethercarbonatpolyol-Endgruppen aus jeweils einem terminalen Block von mindestens zwei Alkylenoxid-Einheiten bestehen. Dagegen liegt im Polyethercarbonatpolyol aus Vergleichsbeispiel 1, bei dem unmittelbar nach Copolymerisation und Nachreaktion der Gehalt an leicht flüchtigen Bestandteilen des erhaltenen Reaktionsgemischs thermisch reduziert wurde, der gemessene Gehalt an Endgruppe 1 (($O(CO)OCH_2$-$CH(OH)CH_3$) mit sekundärem OH) bei 5 mol-%.

Die erfindungsgemäß hergestellten Polyethercarbonatpolyole weisen auch nach thermischer Lagerung nur einen geringen Gehalt an cyclischem Carbonat auf, d.h. nach 66 Stunden Lagerung bei 100°C steigt der Gehalt an cyclischem Propylencarbonat nur leicht an (Beispiele 18, 19 und 20: auf Werte von 18 bis 40 ppm).

**Patentansprüche**

**1.** Verfahren zur Herstellung von Polyethercarbonatpolyolen durch Anlagerung von Alkylenoxiden und Kohlendioxid an H-funktionelle Startersubstanz in Gegenwart eines Doppelmetallcyanid (DMC)-Katalysators oder in Gegenwart eines Metallkomplexkatalysators auf Basis der Metalle Zink und/oder Cobalt, wobei

($\gamma$) Alkylenoxid und Kohlendioxid an H-funktionelle Startersubstanz in einem Reaktor bei einem Gesamtdruck (absolut) von 5 bis 120 bar in Gegenwart eines Doppelmetallcyanid-Katalysators oder in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
($\delta$) das in Schritt ($\gamma$) erhaltene Reaktionsgemisch im Reaktor verbleibt oder gegebenenfalls kontinuierlich in einen Nachreaktor überführt wird bei einem anfänglichen Gesamtdruck (absolut) von 5 bis 120 bar, wobei jeweils im Wege einer Nachreaktion der Gehalt an freiem Alkylenoxid im Reaktionsgemisch reduziert wird, und wobei der Gesamtdruck (absolut) während des Schrittes ($\delta$) um bis zu 50 % abnehmen kann, und
($\zeta$) der Gehalt an leicht flüchtigen Bestandteilen des erhaltenen Reaktionsgemischs bei einer Temperatur von 80°C bis 200°C thermisch reduziert wird,
**dadurch gekennzeichnet, dass**
($\varepsilon$) vor dem Schritt ($\zeta$) das aus Schritt ($\delta$) resultierende Reaktionsgemisch auf einen Gesamtdruck (absolut) von $\leq$ 2,0 bar gebracht wird und dann bei einer Temperatur von 80 bis 180°C für eine Verweilzeit von mindestens 0,5 h belassen wird, und nach Ablauf dieser Verweilzeit zum resultierenden Gemisch 5 bis 100 ppm Komponente

K zugegeben wird, wobei Komponente K ausgewählt ist aus mindestens einer Verbindung, die eine Phosphor-Sauerstoff-Wasserstoff-Gruppe enthält.

2. Verfahren gemäß Anspruch 1, wobei in Schritt (ε) das Reaktionsgemisch vor dem Schritt (ζ) bei einer Temperatur von 80 bis 180°C für eine Verweilzeit von 1,0 h bis 20 h belassen wird, und nach Ablauf dieser Verweilzeit zum resultierenden Gemisch 5 bis 100 ppm Komponente K zugegeben wird.

3. Verfahren gemäß Anspruch 1, wobei in Schritt (ε) das Reaktionsgemisch vor dem Schritt (ζ) bei einer Temperatur von 80 bis 180°C für eine Verweilzeit von 1,0 h bis 20 h belassen wird, und nach Ablauf dieser Verweilzeit zum resultierenden Gemisch 5 bis 75 ppm Komponente K zugegeben wird.

4. Verfahren gemäß Anspruch 1, wobei in Schritt (ε) das Reaktionsgemisch vor dem Schritt (ζ) bei einer Temperatur von 100 bis 160°C für eine Verweilzeit von 1,0 h bis 20 h belassen wird, und nach Ablauf dieser Verweilzeit zum resultierenden Gemisch 5 bis 100 ppm Komponente K zugegeben wird.

5. Verfahren gemäß Anspruch 1, wobei in Schritt (ε) das Reaktionsgemisch vor dem Schritt (ζ) bei einer Temperatur von 100 bis 160°C für eine Verweilzeit von 2,0 h bis 10 h belassen wird, und nach Ablauf dieser Verweilzeit zum resultierenden Gemisch 5 bis 75 ppm Komponente K zugegeben wird.

6. Verfahren gemäß einem der Ansprüche 1 bis 5, wobei die Komponente K, zusätzlich zu Schritt (ε), während Schritt (δ) bei einem Gehalt an freiem Alkylenoxid von 1 g/l bis 10 g/l Alkylenoxid zugegeben wird.

7. Verfahren gemäß einem der Ansprüche 1 bis 6, wobei vor Schritt (γ)
(β) zur Aktivierung eine Teilmenge (bezogen auf die Gesamtmenge der bei der Aktivierung und Copolymerisation eingesetzten Menge an Alkylenoxiden) von Alkylenoxid zu einer Mischung aus H-funktioneller Startersubstanz und DMC-Katalysator oder zu einer Mischung aus Suspensionsmittel und DMC-Katalysator zugesetzt wird, wobei diese Zugabe der Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann.

8. Verfahren gemäß einem der Ansprüche 1 bis 7, wobei in einem ersten Schritt
(α) die H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Suspensionsmittel vor oder nach der Trocknung zugesetzt wird.

9. Verfahren gemäß einem der Ansprüche 1 bis 8, wobei in Schritt (γ) Alkylenoxid, H-funktionelle Startersubstanz und DMC-Katalysator während der Reaktion kontinuierlich in den Reaktor zudosiert werden in Gegenwart von Kohlendioxid und das resultierende Reaktionsgemisch kontinuierlich aus dem Reaktor entfernt wird.

10. Verfahren gemäß einem der Ansprüche 1 bis 9, wobei Komponente K ausgewählt ist aus mindestens einer Verbindung aus der Gruppe bestehend aus
Phosphorsäure,
Mono- und Dialkylester der Phosphorsäure,
Mono- und Diarylester der Phosphorsäure,
Mono- und Dialkarylester der Phosphorsäure,
$(NH_4)_2HPO_4$ ,
Phosphonsäure,
Monoalkylester der Phosphonsäure,
Monoarylester der Phosphonsäure,
Monoalkarylester der Phosphonsäure,
Phosphorige Säure,
Mono- und Dialkylester der Phosphorigen Säure,
Mono- und Diarylester der Phosphorigen Säure,
Mono- und Dialkarylester der Phosphorigen Säure,
Phosphinsäure.

11. Verfahren gemäß einem der Ansprüche 1 bis 10, wobei Komponente K ausgewählt ist aus mindestens einer Verbindung aus der Gruppe bestehend aus Phosphorsäure, Phosphonsäure, und Phosphinsäure.

12. Verfahren gemäß einem der Ansprüche 1 bis 11, wobei Komponente K Phosphorsäure ist.

13. Verfahren gemäß einem der Ansprüche 1 bis 12, wobei in Schritt (δ) das in Schritt (γ) erhaltene Reaktionsgemisch kontinuierlich in einen Nachreaktor überführt wird, wobei der Nachreaktor ein Rohrreaktor ist.

14. Verfahren gemäß einem der Ansprüche 1 bis 13, wobei in Schritt (δ) das in Schritt (γ) erhaltene Reaktionsgemisch kontinuierlich in einen Nachreaktor überführt wird, wobei im Wege der Nachreaktion der Gehalt an freiem Alkylenoxid auf weniger als 0,5 g/l reduziert wird.

15. Polyethercarbonatpolyole erhältlich nach einem der Ansprüche 1 bis 14.

## Claims

1. Process for preparing polyether carbonate polyols by addition of alkylene oxides and carbon dioxide onto H-functional starter substance in the presence of a double metal cyanide (DMC) catalyst or in the presence of a metal complex catalyst based on the metals zinc and/or cobalt, wherein

   (γ) alkylene oxide and carbon dioxide are added onto H-functional starter substance in a reactor at a total (absolute) pressure of 5 to 120 bar in the presence of a double metal cyanide catalyst or in the presence of a metal complex catalyst based on the metals zinc and/or cobalt to obtain a reaction mixture comprising the polyether carbonate polyol,
   (δ) the reaction mixture obtained in step (γ) remains in the reactor or is optionally transferred continuously into a postreactor at an initial total (absolute) pressure of 5 to 120 bar, wherein the content of free alkylene oxide in the reaction mixture is reduced in each case by way of a postreaction, and wherein the total (absolute) pressure during step (δ) can decrease by up to 50%, and
   (ζ) the content of readily volatile constituents in the reaction mixture obtained is thermally reduced at a temperature of 80°C to 200°C,
   **characterized in that**
   (ε) prior to step (ζ), the reaction mixture resulting from step (δ) is brought to a total (absolute) pressure of ≤ 2.0 bar and then held at a temperature of 80 to 180°C for a residence time of at least 0.5 h, and after this residence time has elapsed 5 to 100 ppm of component K is added to the resulting mixture, wherein component K is selected from at least one compound containing a phosphorus-oxygen-hydrogen group.

2. Process according to Claim 1, wherein, in step (ε), the reaction mixture prior to step (ζ) is held at a temperature of 80 to 180°C for a residence time of 1.0 h to 20 h, and after this residence time has elapsed 5 to 100 ppm of component K is added to the resulting mixture.

3. Process according to Claim 1, wherein, in step (ε), the reaction mixture prior to step (ζ) is held at a temperature of 80 to 180°C for a residence time of 1.0 h to 20 h, and after this residence time has elapsed 5 to 75 ppm of component K is added to the resulting mixture.

4. Process according to Claim 1, wherein, in step (ε), the reaction mixture prior to step (ζ) is held at a temperature of 100 to 160°C for a residence time of 1.0 h to 20 h, and after this residence time has elapsed 5 to 100 ppm of component K is added to the resulting mixture.

5. Process according to Claim 1, wherein, in step (ε), the reaction mixture prior to step (ζ) is held at a temperature of 100 to 160°C for a residence time of 2.0 h to 10 h, and after this residence time has elapsed 5 to 75 ppm of component K is added to the resulting mixture.

6. Process according to any of Claims 1 to 5, wherein component K, in addition to step (ε), is added during step (δ) at a free alkylene oxide content of 1 g/L to 10 g/L alkylene oxide.

7. Process according to any of Claims 1 to 6, wherein prior to step (γ)
   (β) activation is accomplished by adding a portion (based on the total amount of the amount of alkylene oxides used

in the activation and copolymerization) of alkylene oxide to a mixture of H-functional starter substance and DMC catalyst or to a mixture of suspension medium and DMC catalyst, wherein this addition of the portion of alkylene oxide can optionally be effected in the presence of $CO_2$, in which case the temperature peak ("hotspot") that occurs owing to the subsequent exothermic chemical reaction and/or a pressure drop in the reactor is awaited in each case, and wherein activation step (β) can also be effected repeatedly.

8. Process according to any of Claims 1 to 7, wherein in a first step
(α) the H-functional starter substance or a suspension medium is initially charged and any water and/or other readily volatile compounds are removed by elevated temperature and/or reduced pressure ("drying"), wherein the DMC catalyst is added to the H-functional starter substance or to the suspension medium before or after the drying.

9. Process according to any of Claims 1 to 8, wherein in step (γ) alkylene oxide, H-functional starter substance and DMC catalyst are continuously metered into the reactor during the reaction in the presence of carbon dioxide and the resulting reaction mixture is continuously removed from the reactor.

10. Process according to any of Claims 1 to 9, wherein component K is selected from at least one compound from the group consisting of
phosphoric acid,
mono- and dialkyl esters of phosphoric acid,
mono- and diaryl esters of phosphoric acid,
mono- and dialkaryl esters of phosphoric acid,
$(NH_4)_2HPO_4$,
phosphonic acid,
monoalkyl esters of phosphonic acid,
monoaryl esters of phosphonic acid,
monoalkaryl esters of phosphonic acid,
phosphorous acid,
mono- and dialkyl esters of phosphorous acid,
mono- and diaryl esters of phosphorous acid,
mono- and dialkaryl esters of phosphorous acid, phosphinic acid.

11. Process according to any of Claims 1 to 10, wherein component K is selected from at least one compound from the group consisting of phosphoric acid, phosphonic acid and phosphinic acid.

12. Process according to any of Claims 1 to 11, wherein component K is phosphoric acid.

13. Process according to any of Claims 1 to 12, wherein in step (δ) the reaction mixture obtained in step (γ) is transferred continuously into a postreactor, wherein the postreactor is a tubular reactor.

14. Process according to any of Claims 1 to 13, wherein in step (δ) the reaction mixture obtained in step (γ) is transferred continuously into a postreactor, wherein the content of free alkylene oxide is reduced to less than 0.5 g/L by way of postreaction.

15. Polyether carbonate polyols obtainable according to any of Claims 1 to 14.

**Revendications**

1. Procédé pour la préparation de polyéthercarbonatepolyols par addition d'oxydes d'alkylène et de dioxyde de carbone sur une substance de départ fonctionnalisée par H en présence d'un catalyseur de type cyanure métallique double (DMC) ou en présence d'un catalyseur de type complexe métallique à base des métaux zinc et/ou cobalt,

(γ) un oxyde d'alkylène et du dioxyde de carbone étant additionnés sur une substance de départ fonctionnalisée par H dans un réacteur à une pression totale (absolue) de 5 à 120 bars en présence d'un catalyseur de type cyanure métallique double ou en présence d'un catalyseur de type complexe métallique à base des métaux zinc et/ou cobalt, un mélange réactionnel contenant le polyéthercarbonatepolyols étant obtenu,
(δ) le mélange réactionnel obtenu dans l'étape (γ) restant dans le réacteur ou éventuellement étant transféré en continu dans un post-réacteur à une pression totale de départ (absolue) de 5 à 120 bars, dans lequel à

chaque fois par le biais d'une post-réaction la teneur en oxyde d'alkylène libre dans le mélange réactionnel est réduite, et la pression totale (absolue) pendant l'étape (δ) pouvant diminuer de 50 % au maximum, et
(ζ) la teneur en ingrédients légèrement volatiles du mélange réactionnel obtenu étant réduite thermiquement à une température de 80 °C à 200 °C,
**caractérisé en ce que**
(ε) avant l'étape (ζ), le mélange réactionnel résultant de l'étape (δ) est amené à une pression totale (absolue) ≤ 2,0 bars et ensuite est maintenu à une température de 80 à 180 °C pour un temps de séjour d'au moins 0,5 h, et après la fin de ce temps de séjour, 5 à 100 ppm de composant K sont ajoutés au mélange résultant, le composant K étant choisi parmi au moins un composé qui contient un groupe phosphore-oxygène-hydrogène.

**2.** Procédé selon la revendication 1, dans lequel dans l'étape (ε), le mélange réactionnel avant l'étape (ζ) est maintenu à une température de 80 à 180 °C pour un temps de séjour de 1,0 h à 20 h, et après la fin de ce temps de séjour 5 à 100 ppm de composant K sont ajoutés au mélange résultant.

**3.** Procédé selon la revendication 1, dans lequel dans l'étape (ε), le mélange réactionnel avant l'étape (ζ) est maintenu à une température de 80 à 180 °C pour un temps de séjour de 1,0 h à 20 h, et après la fin de ce temps de séjour 5 à 75 ppm de composant K sont ajoutés au mélange résultant.

**4.** Procédé selon la revendication 1, dans lequel dans l'étape (ε), le mélange réactionnel avant l'étape (ζ) est maintenu à une température de 100 à 160 °C pour un temps de séjour de 1,0 h à 20 h, et après la fin de ce temps de séjour 5 à 100 ppm de composant K sont ajoutés au mélange résultant.

**5.** Procédé selon la revendication 1, dans lequel dans l'étape (ε), le mélange réactionnel avant l'étape (ζ) est maintenu à une température de 100 à 160 °C pour un temps de séjour de 2,0 h à 10 h, et après la fin de ce temps de séjour 5 à 75 ppm de composant K sont ajoutés au mélange résultant.

**6.** Procédé selon l'une quelconque des revendications 1 à 5, le composant K, en plus de l'étape (ε), étant ajouté pendant l'étape (δ) lorsqu'une teneur en oxyde d'alkylène libre est de 1 g/l à 10 g/l d'oxyde d'alkylène.

**7.** Procédé selon l'une quelconque des revendications 1 à 6, dans lequel avant l'étape (γ)
(β) pour l'activation, une quantité partielle (par rapport à la quantité totale de la quantité d'oxydes d'alkylène utilisée lors de l'activation et de la copolymérisation) d'oxyde d'alkylène étant ajoutée à un mélange de substance de départ fonctionnalisée par H et de catalyseur DMC ou à un mélange d'agent de suspension et de catalyseur DMC, cet ajout de la quantité partielle d'oxyde d'alkylène pouvant être réalisé éventuellement en présence de $CO_2$, et ensuite, le pic de température (« hotspot ») apparaissant en raison de la réaction chimique exothermique suivante et/ou une chute de pression dans le réacteur étant à chaque fois attendu(e), et l'étape (β) pour l'activation pouvant être réalisée également plusieurs fois.

**8.** Procédé selon l'une quelconque des revendications 1 à 7, dans lequel dans une première étape
(α) la substance de départ fonctionnalisée par H ou un agent de suspension étant fourni(e) et éventuellement de l'eau et/ou d'autres composés légèrement volatiles étant éliminés par une température élevée ou une pression réduite (« séchage »), le catalyseur DMC étant ajouté à la substance de départ fonctionnalisée par H ou à l'agent de suspension avant ou après le séchage.

**9.** Procédé selon l'une quelconque des revendications 1 à 8, dans lequel dans l'étape (γ), un oxyde d'alkylène, une substance de départ fonctionnalisée par H et un catalyseur DMC sont ajoutés en continu de manière dosée dans le réacteur en présence de dioxyde de carbone et le mélange réactionnel résultant est éliminé en continu du réacteur.

**10.** Procédé selon l'une quelconque des revendications 1 à 9, le composant K étant choisi parmi au moins un composé du groupe constitué par l'acide phosphorique,
des esters de monoalkyle et de dialkyle de l'acide phosphorique,
des esters de monoaryle et de diaryle de l'acide phosphorique,
des esters de monoalkaryle et de dialkaryle de l'acide phosphorique,
$(NH_4)_2HPO_4$,
l'acide phosphonique,
des esters de monoalkyle de l'acide phosphonique, des esters de monoaryle de l'acide phosphonique, des esters de monoalkaryle de l'acide phosphonique,
l'acide phosphoreux,

des esters de monoalkyle et de dialkyle de l'acide phosphoreux,
des esters de monoaryle et de diaryle de l'acide phosphoreux,
des esters de monoalkaryle et de dialkaryle de l'acide phosphoreux,
l'acide phosphinique.

**11.** Procédé selon l'une quelconque des revendications 1 à 10, le composant K étant choisi parmi au moins un composé du groupe constitué par l'acide phosphorique, l'acide phosphonique, et l'acide phosphinique.

**12.** Procédé selon l'une quelconque des revendications 1 à 11, le composant K étant l'acide phosphorique.

**13.** Procédé selon l'une quelconque des revendications 1 à 12, dans lequel dans l'étape (δ), le mélange réactionnel obtenu dans l'étape (γ) est transféré en continu dans un post-réacteur, le post-réacteur étant un réacteur tubulaire.

**14.** Procédé selon l'une quelconque des revendications 1 à 13, dans lequel dans l'étape (δ), le mélange réactionnel obtenu dans l'étape (γ) est transféré en continu dans un post-réacteur, dans lequel par le biais de la post-réaction, la teneur en oxyde d'alkylène libre est réduite à moins de 0,5 g/l.

**15.** Polyéthercarbonatepolyols pouvant être obtenus selon l'une quelconque des revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0222453 A
- WO 2003029325 A
- WO 2008058913 A
- EP 2530101 A
- US 4145525 A
- WO 2015014732 A1
- EP 14175603
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 200180994 A1

### In der Beschreibung aufgeführte Nicht-Patentliteratur

- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931